# EUROPEAN PATENT APPLICATION

(11) **EP 4 801 110 A2**
(43) Date of publication of application: **02.09.2026**
(21) Application number: 26192958.2
(22) Date of filing: 04.02.2022
(51) Int. Cl.: H04W 36/00

(54) **PING PONG HANDOVER OR REDIRECTION DETECTION AND AVOIDANCE**

(62) Document number(s) of the earlier application(s) in accordance with Art. 76 EPC: 22924624.4 / 4 473 762
(71) Applicant: QUALCOMM Incorporated, San Diego, CA 92121-1714 (US)
(72) Inventor: LIU, Wenjing, San Diego, 92121-1714 (US); ZHU, Xianwei, San Diego, 92121-1714 (US); DU, Yifan, San Diego, 92121-1714 (US); WU, Nanrun, San Diego, 92121-1714 (US); SANTHANAM, Arvind Vardarajan, San Diego, 92121-1714 (US); HU, Peng, San Diego, 92121-1714 (US); LIU, Jiaheng, San Diego, 92121-1714 (US); GU, Hewu, San Diego, 92121-1714 (US); CHEN, Xiaochen, San Diego, 92121-1714 (US); SINGH, Sumit Kumar, San Diego, 92121-1714 (US); DENG, Jun, San Diego, 92121-1714 (US); LU, Xiaoning, San Diego, 92121-1714 (US); CHIN, Tom, San Diego, 92121-1714 (US); ZHANG, Xuqiang, San Diego, 92121-1714 (US)
(74) Representative: Tomkins & Co

(57) **Abstract**

Various aspects of the present disclosure generally relate to wireless communication. In some aspects, a user equipment (UE) may compare an external list of ping pong handovers or redirections that is maintained by an access point, and an internal list of ping pong handovers or redirections that is maintained by the UE. The UE may identify a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node.

Numerous other aspects are described.

## Description

### FIELD OF THE DISCLOSURE

Aspects of the present disclosure generally relate to wireless communication and to techniques and apparatuses for ping pong handover or redirection detection and avoidance.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

### SUMMARY

Some aspects described herein relate to a method of wireless communication performed by a user equipment (UE). The method may include comparing an external list of ping pong handovers or redirections that is maintained by an access point, and an internal list of ping pong handovers or redirections that is maintained by the UE. The method may include identifying a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node.

Some aspects described herein relate to a method of wireless communication performed by a UE. The method may include obtaining a configuration that indicates one or more measurement conditions associated with a reporting event. The method may include obtaining an indication that the reporting event is associated with a handover or redirection between a first network node and a second network node. The method may include obtaining an indication that the handover or redirection between the first network node and the second network node is a ping pong handover or redirection. The method may include applying one or more other measurement conditions to avoid the ping pong handover or redirection.

Some aspects described herein relate to an apparatus for wireless communication performed by a UE. The apparatus may include a memory and one or more processors, coupled to the memory. The one or more processors may be configured to compare an external list of ping pong handovers or redirections that is maintained by an access point, and an internal list of ping pong handovers or redirections that is maintained by the UE. The one or more processors may be configured to identify a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node.

Some aspects described herein relate to an apparatus for wireless communication performed by a UE. The apparatus may include a memory and one or more processors, coupled to the memory. The one or more processors may be configured to obtain a configuration that indicates one or more measurement conditions associated with a reporting event. The one or more processors may be configured to obtain an indication that the reporting event is associated with a handover or redirection between a first network node and a second network node. The one or more processors may be configured to obtain an indication that the handover or redirection between the first network node and the second network node is a ping pong handover or redirection. The one or more processors may be configured to apply one or more other measurement conditions to avoid the ping pong handover or redirection.

Some aspects described herein relate to a non-transitory computer-readable medium that stores a set of instructions for wireless communication by a UE. The set of instructions, when executed by one or more processors of the UE, may cause the UE to compare an external list of ping pong handovers or redirections that is maintained by an access point, and an internal list of ping pong handovers or redirections that is maintained by the UE. The set of instructions, when executed by one or more processors of the UE, may cause the UE to identify a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node.

Some aspects described herein relate to a non-transitory computer-readable medium that stores a set of instructions for wireless communication by a UE. The set of instructions, when executed by one or more processors of the UE, may cause the UE to obtain a configuration that indicates one or more measurement conditions associated with a reporting event. The set of instructions, when executed by one or more processors of the UE, may cause the UE to obtain an indication that the reporting event is associated with a handover or redirection between a first network node and a second network node. The set of instructions, when executed by one or more processors of the UE, may cause the UE to obtain an indication that the handover or redirection between the first network node and the second network node is a ping pong handover or redirection. The set of instructions, when executed by one or more processors of the UE, may cause the UE to apply one or more other measurement conditions to avoid the ping pong handover or redirection.

Some aspects described herein relate to an apparatus for wireless communication. The apparatus may include means for comparing an external list of ping pong handovers or redirections that is maintained by an access point, and an internal list of ping pong handovers or redirections that is maintained by the apparatus. The apparatus may include means for identifying a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node.

Some aspects described herein relate to an apparatus for wireless communication. The apparatus may include means for obtaining a configuration that indicates one or more measurement conditions associated with a reporting event. The apparatus may include means for obtaining an indication that the reporting event is associated with a handover or redirection between a first network node and a second network node. The apparatus may include means for obtaining an indication that the handover or redirection between the first network node and the second network node is a ping pong handover or redirection. The apparatus may include means for applying one or more other measurement conditions to avoid the ping pong handover or redirection.

Aspects generally include a method, apparatus, system, computer program product, non-transitory computer-readable medium, user equipment, base station, wireless communication device, and/or processing system as substantially described herein with reference to and as illustrated by the drawings.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages, will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment in a wireless network, in accordance with the present disclosure.
Fig. 3 is a diagram illustrating an example of a handover procedure, in accordance with the present disclosure.
Fig. 4 is a diagram illustrating an example associated with ping pong handover or redirection detection, in accordance with the present disclosure.
Fig. 5 is a diagram illustrating an example associated with ping pong handover or redirection avoidance, in accordance with the present disclosure.
Fig. 6 is a diagram illustrating an example associated with ping pong handover or redirection detection, in accordance with the present disclosure.
Fig. 7 is a diagram illustrating an example associated with ping pong handover or redirection avoidance, in accordance with the present disclosure.
Fig. 8 is a diagram illustrating an example process associated with ping pong handover or redirection detection, in accordance with the present disclosure.
Fig. 9 is a diagram illustrating an example process associated with ping pong handover or redirection avoidance, in accordance with the present disclosure.
Fig. 10 is a diagram of an example apparatus for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

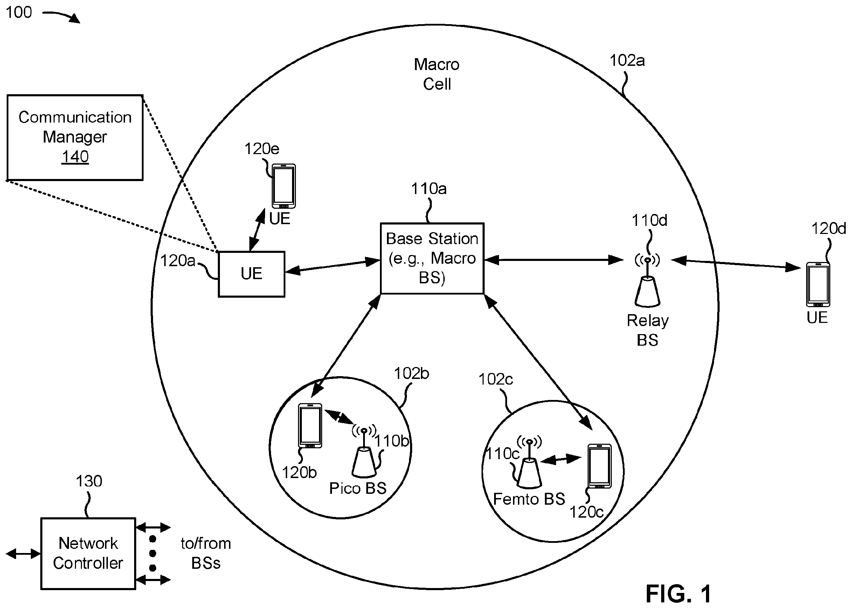

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some aspects, the term "base station" (e.g., the base station 110) or "network node" may refer to an aggregated base station, a disaggregated base station, an integrated access and backhaul (IAB) node, a relay node, and/or one or more components thereof. For example, in some aspects, "base station" or "network node" may refer to a central unit (CU), a distributed unit (DU), a radio unit (RU), a Near-Real Time (Near-RT) RAN Intelligent Controller (RIC), or a Non-Real Time (Non-RT) RIC, or a combination thereof. In some aspects, the term "base station" or "network node" may refer to one device configured to perform one or more functions, such as those described herein in connection with the base station 110. In some aspects, the term "base station" or "network node" may refer to a plurality of devices configured to perform the one or more functions. For example, in some distributed systems, each of a number of different devices (which may be located in the same geographic location or in different geographic locations) may be configured to perform at least a portion of a function, or to duplicate performance of at least a portion of the function, and the term "base station" or "network node" may refer to any one or more of those different devices. In some aspects, the term "base station" or "network node" may refer to one or more virtual base stations and/or one or more virtual base station functions. For example, in some aspects, two or more base station functions may be instantiated on a single device. In some aspects, the term "base station" or "network node" may refer to one of the base station functions and not another. In this way, a single device may include more than one base station.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, the UE 120 may include a communication manager 140. As described in more detail elsewhere herein, the communication manager 140 may compare an external list of ping pong handovers or redirections that is maintained by an access point, and an internal list of ping pong handovers or redirections that is maintained by the UE; and identify a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node. Additionally, or alternatively, the communication manager 140 may perform one or more other operations described herein.

In some aspects, the communication manager 140 may obtain a configuration that indicates one or more measurement conditions associated with a reporting event; obtain an indication that the reporting event is associated with a handover or redirection between a first network node and a second network node; obtain an indication that the handover or redirection between the first network node and the second network node is a ping pong handover or redirection; and apply one or more other measurement conditions to avoid the ping pong handover or redirection. Additionally, or alternatively, the communication manager 140 may perform one or more other operations described herein.

As indicated above, Fig. 1 is provided as an example. Other examples may differ from what is described with regard to Fig. 1.

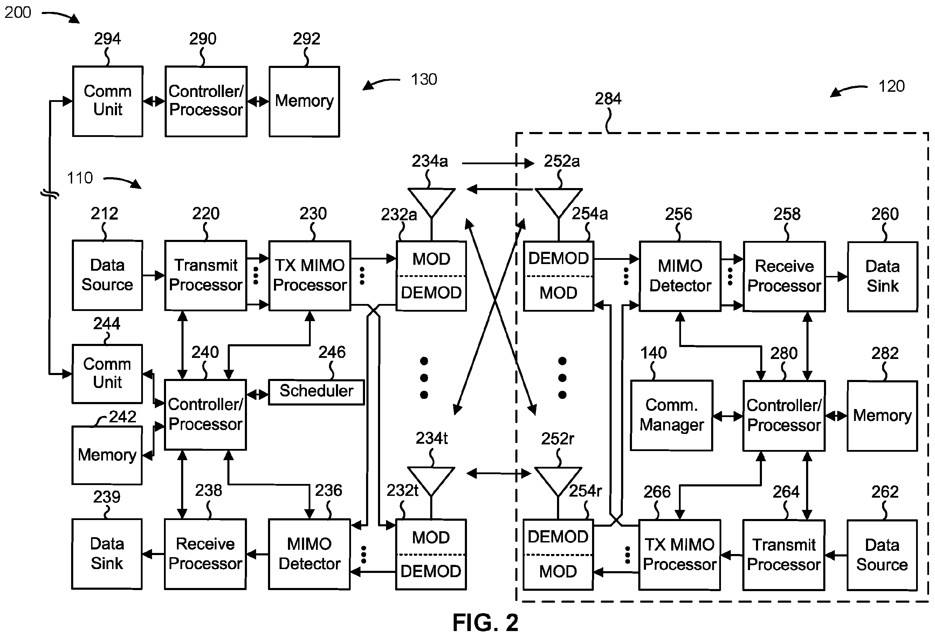

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as *R* antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., *T* output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., *R* received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

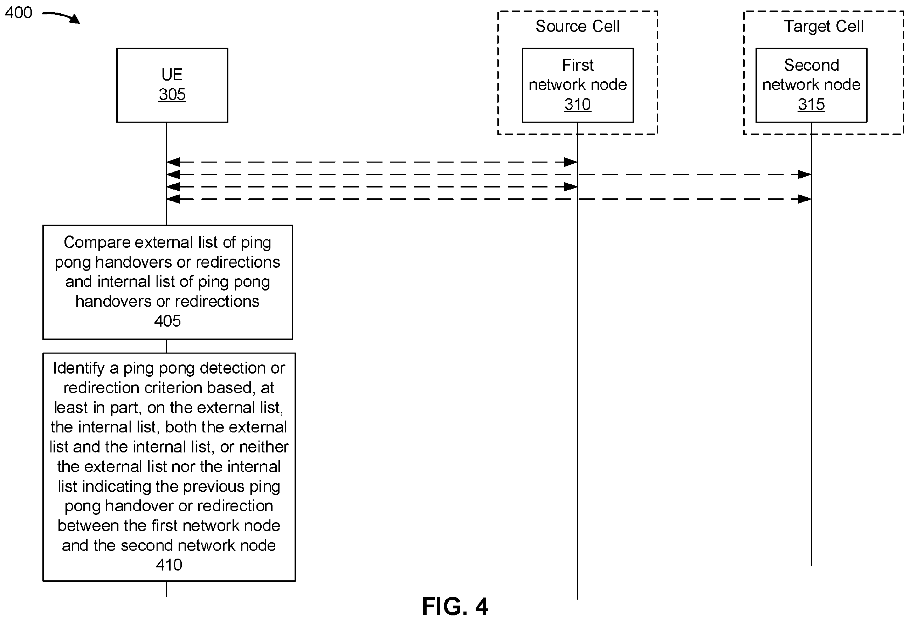

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 4-10).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 4-10).

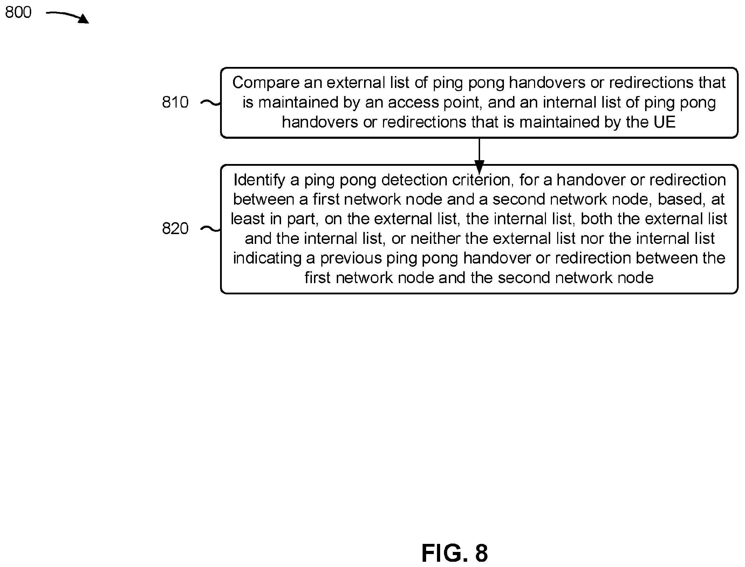

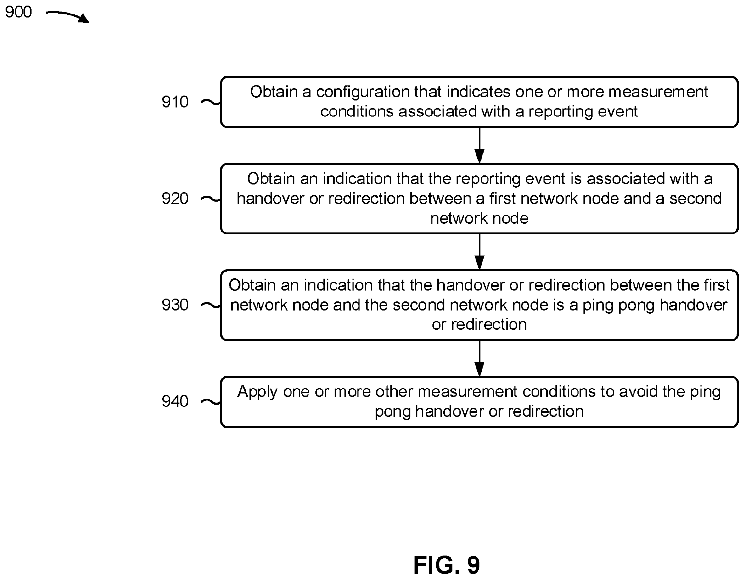

The controller/processor 240 of the base station 110, the controller/processor 280 of the UE 120, and/or any other component(s) of Fig. 2 may perform one or more techniques associated with ping pong handover or redirection detection and avoidance, as described in more detail elsewhere herein. For example, the controller/processor 240 of the base station 110, the controller/processor 280 of the UE 120, and/or any other component(s) of Fig. 2 may perform or direct operations of, for example, process 800 of Fig. 8, process 900 of Fig. 9, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 800 of Fig. 8, process 900 of Fig. 9, and/or other processes as described herein. In some examples, executing instructions may include running the instructions, converting the instructions, compiling the instructions, and/or interpreting the instructions, among other examples.

In some aspects, the UE 120 includes means for comparing an external list of ping pong handovers or redirections that is maintained by an access point, and an internal list of ping pong handovers or redirections that is maintained by the UE (e.g., using controller/processor 280, memory 282, or the like); and/or means for identifying a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node (e.g., using controller/processor 280, memory 282, or the like). The means for the UE 120 to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, the UE 120 includes means for obtaining a configuration that indicates one or more measurement conditions associated with a reporting event (e.g., using antenna 252, modem 254, MIMO detector 256, receive processor 258, controller/processor 280, memory 282, or the like); means for obtaining an indication that the reporting event is associated with a handover or redirection between a first network node and a second network node (e.g., using antenna 252, modem 254, MIMO detector 256, receive processor 258, controller/processor 280, memory 282, or the like); means for obtaining an indication that the handover or redirection between the first network node and the second network node is a ping pong handover or redirection (e.g., using antenna 252, modem 254, MIMO detector 256, receive processor 258, controller/processor 280, memory 282, or the like); and/or means for applying one or more other measurement conditions to avoid the ping pong handover or redirection (e.g., using controller/processor 280, memory 282, or the like). The means for the UE 120 to perform operations described herein may include, for example, one or more of communication manager 140, antenna 252, modem 254, MIMO detector 256, receive processor 258, transmit processor 264, TX MIMO processor 266, controller/processor 280, or memory 282.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

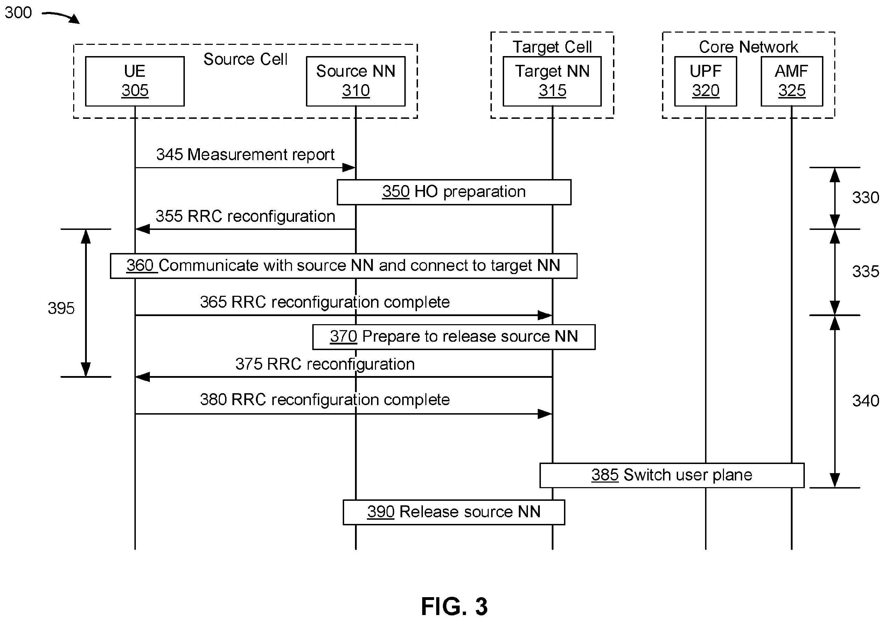

Fig. 3 is a diagram illustrating an example 300 of a handover procedure, in accordance with the present disclosure.

As shown in Fig. 3, the handover procedure may involve a UE 305, a source network node (NN) 310, a target network node 315, a user plane function (UPF) device 320, and an access and mobility management function (AMF) device 325. The UE 305 may correspond to the UE 120 described elsewhere herein. The source network node 310 and/or the target network node 315 may correspond to the network node 110 described elsewhere herein. The UPF device 320 and/or the AMF device 325 may correspond to the network controller 130 described elsewhere herein. The UE 305 and the source network node 310 may be connected (e.g., may have a radio resource control (RRC) connection) via a serving cell or a source cell, and the UE 305 may undergo a handover to the target network node 315 via a target cell. The UPF device 320 and/or the AMF device 325 may be located within a core network. The source network node 310 and the target network node 315 may be in communication with the core network for mobility support and user plane functions. In some cases, the handover procedure may be a make-before-break (MBB) handover procedure. In some cases, the MBB handover procedure may include an enhanced MBB (eMBB) handover procedure.

As shown, the handover procedure may include a handover preparation phase 330, a handover execution phase 335, and a handover completion phase 340. During the handover preparation phase 330, the UE 305 may report measurements that cause the source network node 310 and/or the target network node 315 to prepare for handover and trigger execution of the handover. During the handover execution phase 335, the UE 305 may execute the handover by performing a random access procedure with the target network node 315 and establishing an RRC connection with the target network node 315. During the handover completion phase 340, the source network node 310 may forward stored communications associated with the UE 305 to the target network node 315, and the UE 305 may be released from a connection with the source network node 310.

As shown by reference number 345, the UE 305 may perform one or more measurements, and may transmit a measurement report to the source network node 310 based at least in part on performing the one or more measurements (e.g., serving cell measurements and/or neighbor cell measurements). The measurement report may indicate, for example, a reference signal received power (RSRP) parameter, a reference signal received quality (RSRQ) parameter, a received signal strength indicator (RSSI) parameter, and/or a signal-to-interference-plus-noise ratio (SINR) parameter (e.g., for the serving cell and/or one or more neighbor cells). The source network node 310 may use the measurement report to determine whether to trigger a handover to the target network node 315. For example, if one or more measurements satisfy a condition, then the source network node 310 may trigger a handover of the UE 305 to the target network node 315.

As shown by reference number 350, the source network node 310 and the target network node 315 may communicate with one another to prepare for a handover of the UE 305. As part of the handover preparation, the source network node 310 may transmit a handover request to the target network node 315 to instruct the target network node 315 to prepare for the handover. The source network node 310 may communicate radio resource control (RRC) context information associated with the UE 305 and/or configuration information associated with the UE 305 to the target network node 315. The target network node 315 may prepare for the handover by reserving resources for the UE 305. After reserving the resources, the target network node 315 may transmit an acknowledgement (ACK) to the source network node 310 in response to the handover request.

As shown by reference number 355, the source network node 310 may transmit an RRC reconfiguration message to the UE 305. The RRC reconfiguration message may include a handover command instructing the UE 305 to execute a handover procedure from the source network node 310 to the target network node 315. The handover command may include information associated with the target network node 315, such as a random access channel (RACH) preamble assignment for accessing the target network node 315. Reception of the RRC reconfiguration message, including the handover command, by the UE 305 may trigger the start of the handover execution phase 335.

As shown by reference number 360, during the handover execution phase 335 of the handover, the UE 305 may execute the handover by performing a random access procedure with the target network node 315 (e.g., including synchronization with the target network node 315) while continuing to communicate with the source network node 310. For example, while the UE 305 is performing the random access procedure with the target network node 315, the UE 305 may transmit uplink data, uplink control information, and/or an uplink reference signal (e.g., a sounding reference signal) to the source network node 310, and/or may receive downlink data, downlink control information, and/or a downlink reference signal from the source network node 310.

As shown by reference number 365, upon successfully establishing a connection with the target network node 315 (e.g., via a random access procedure), the UE may transmit an RRC reconfiguration completion message to the target network node 315. Reception of the RRC reconfiguration message by the target network node 315 may trigger the start of the handover completion phase 340.

As shown by reference number 370, the source network node 310 and the target network node 315 may communicate with one another to prepare for release of the connection between the source network node 310 and the UE 305. In some aspects, the target network node 315 may determine that a connection between the source network node 310 and the UE 305 is to be released, such as after receiving the RRC reconfiguration message from the UE 305. In this case, the target network node 315 may transmit a handover connection setup completion message to the source network node 310. The handover connection setup completion message may cause the source network node 310 to stop transmitting data to the UE 305 and/or to stop receiving data from the UE 305. Additionally, or alternatively, the handover connection setup completion message may cause the source network node 310 to forward communications associated with the UE 305 to the target network node 315 and/or to notify the target network node 315 of a status of one or more communications with the UE 305. For example, the source network node 310 may forward, to the target network node 315, buffered downlink communications (e.g., downlink data) for the UE 305 and/or uplink communications (e.g., uplink data) received from the UE 305. Additionally, or alternatively, the source network node 310 may notify the target network node 315 regarding a packet data convergence protocol (PDCP) status associated with the UE 305 and/or a sequence number to be used for a downlink communication with the UE 305.

As shown by reference number 375, the target network node 315 may transmit an RRC reconfiguration message to the UE 305 to instruct the UE 305 to release the connection with the source network node 310. Upon receiving the instruction to release the connection with the source network node 310, the UE 305 may stop communicating with the source network node 310. For example, the UE 305 may refrain from transmitting uplink communications to the source network node 310 and/or may refrain from monitoring for downlink communications from the source network node 310.

As shown by reference number 380, the UE may transmit an RRC reconfiguration completion message to the target network node 315 to indicate that the connection between the source network node 310 and the UE 305 is being released or has been released.

As shown by reference number 385, the target network node 315, the UPF device 320, and/or the AMF device 325 may communicate to switch a user plane path of the UE 305 from the source network node 310 to the target network node 315. Prior to switching the user plane path, downlink communications for the UE 305 may be routed through the core network to the source network node 310. After the user plane path is switched, downlink communications for the UE 305 may be routed through the core network to the target network node 315. Upon completing the switch of the user plane path, the AMF device 325 may transmit an end marker message to the source network node 310 to signal completion of the user plane path switch. As shown by reference number 390, the target network node 315 and the source network node 310 may communicate to release the source network node 310.

As part of the handover procedure, the UE 305 may maintain simultaneous connections with the source network node 310 and the target network node 315 during a time period 395. The time period 395 may start at the beginning of the handover execution phase 335 (e.g., upon reception by the UE 305 of a handover command from the source network node 310) when the UE 305 performs a random access procedure with the target network node 315. The time period 395 may end upon release of the connection between the UE 305 and the source network node 310 (e.g., upon reception by the UE 305 of an instruction, from the target network node 315, to release the source network node 310). By maintaining simultaneous connections with the source network node 310 and the target network node 315, the handover procedure can be performed with zero or a minimal interruption to communications, thereby reducing latency.

In some cases, the UE 305 may report one or more measurements (e.g., channel measurements). The UE 305 may report the one or more measurements based at least in part on an occurrence of a reporting event. In some cases, the measurements may include the RSRP measurement, the RSRQ measurement, and/or the SINR measurement. Some example reporting events are described below. However, the reporting events are not limited to the examples provided.

In some cases, the reporting event may be an event A1. The event A1 may be triggered when a serving cell measurement becomes greater than a threshold. In some cases, the event A1 may be used to cancel an ongoing mobility procedure. This may be required if the UE 305 moves toward a cell edge and triggers a mobility procedure, but then subsequently moves back into good coverage before the mobility procedure has completed.

In some cases, the reporting event may be an event A2. The event A2 may be triggered when the serving cell measurement becomes less than a threshold. In some cases, the event A2 may be used to trigger a mobility procedure when the UE 305 moves toward the cell edge. The event A2 may not involve any neighbor cell measurements, so it may be used to trigger a blind mobility procedure. Alternatively, it may be used to trigger a set of neighbor cell measurements which can then be used for a measurement-based mobility procedure. For example, the network node may configure measurement gaps and inter-frequency or inter-system measurements after the event A2 has been triggered. Thus, the UE 305 may only need to complete the inter-frequency or inter-system measurements when coverage conditions are relatively poor and there is a high probability that a handover will be required.

In some cases, the reporting event may be an event A3. The event A3 may be triggered when a neighboring cell measurement becomes greater than a special cell measurement by an offset. The special cell may be the primary serving cell of either the master cell group (MCG) or secondary cell group (SCG). The offset can be either positive or negative. The event A3 may be used for intra-frequency or inter-frequency handover procedures. The UE 305 may be configured with measurement gaps and an event A3 for inter-frequency handover after an A2 reporting event has been triggered. The event A3 may provide a handover triggering mechanism based at least in part upon relative measurement results. For example, it can be configured to trigger when the RSRP of a neighboring cell is stronger than the RSRP of a special cell.

In some cases, the reporting event may be an event A4. The event A4 may be triggered when a neighboring cell measurement becomes greater than a threshold. The event A4 may be used for mobility procedures which do not have a dependence upon the coverage of the current serving cell. For example, load balancing procedures take the decision to move the UE 305 away from the current serving cell due to load conditions rather than radio conditions. In this case, the UE 305 may only need to verify that the candidate target cell provides adequate coverage.

In some cases, the reporting event may be an event A5. The event A5 may be triggered when the special cell measurement becomes less than a first threshold, while a neighboring cell measurement becomes greater than a second threshold. The event A5 may be used for intra-frequency or inter-frequency handover procedures. The UE 305 may be configured with measurement gaps and an event A5 for inter-frequency handover after an A2 reporting event has triggered. The event A5 may provide a handover triggering mechanism based upon absolute measurement results. For example, it can be used to trigger a time critical handover when a current special cell becomes weak and it is necessary to change toward another cell which may not satisfy the criteria for the event A3 handover.

In some cases, the reporting event may be an event A6. The event A6 may be triggered when a neighboring cell measurement becomes greater than a secondary cell measurement by an offset. The offset may be either positive or negative. This measurement reporting event is applicable to carrier aggregation (e.g., conditions which have secondary serving cells in addition to a primary serving cell). The event A6 may be used for secondary cell swap procedures. For example, it may be necessary to swap the secondary cell if the primary cell and secondary cell carriers use different antenna with different azimuths. This can lead to changes in the best secondary cell as the UE 305 moves within the coverage of the primary serving cell.

In some cases, the reporting event may be an event B1. The event B1 may be triggered when a neighboring inter-system cell measurement becomes greater than a threshold. The event B1 can be used for inter-system mobility procedures which do not have a dependence upon the coverage of the current serving cell. For example, load balancing procedures take the decision to move away from a UE 305 away from the NR network due to load conditions rather than radio conditions. In this case, the UE 305 only needs to verify that the candidate target cell provides adequate coverage.

In some cases, the reporting event may be an event B2. The event B2 may be triggered when a primary serving cell measurement becomes less than a first threshold, while a neighboring inter-system cell measurement becomes greater than a second threshold. The event B2 may be used to trigger inter-system mobility procedures when the primary serving cell becomes weak. Inter-system neighbor cell measurements may be used to ensure that the target cell provides adequate coverage.

As indicated above, these reporting events are provided as examples only. The reporting events are not limited to the A1, A2, A3, A4, A5, A6, B1, and B2 reporting events described above. In some aspects, the term "greater than a threshold" means "greater than a threshold, or greater than or equal to the threshold." Similarly, the term "less than a threshold" means "less than a threshold, or less than or equal to the threshold."

In some cases, the handover procedure described herein may result in a ping pong handover or redirection. "Ping pong handover or redirection" may refer to the UE 305 switching between a source cell (e.g., the source network node 310) and a target cell (e.g., the target network node 315) multiple times. For example, the UE 305 may switch between the source network node 310 and the target network node 315 multiple times within a time period. This may create a ping pong (e.g., back-and-forth) effect.

In some cases, the ping pong handover or redirection may occur between an LTE network (e.g., a 4G network) and an NR network (e.g., a 5G network). For example, the first network node 310 (e.g., source node or serving node) may be associated with the LTE network, and the second network node 315 (e.g., target node) may be associated with the NR network. The UE 305 may switch between the first network node 310, associated with the LTE network, and the second network node 315, associated with the NR network, multiple times in a time period, thereby creating a ping pong handover or redirection effect between the two networks.

In some cases, the B1 threshold may be configured close to the LTE side and the NR side. For example,, it may be easy for the UE 305 to satisfy the B1 criteria for both the first network node 310, associated with the LTE network, and the second network node 315, associated with the NR network. Thus, the UE 305 may switch between the first network node 310 and the second network node 315 without violating the event B1 reporting conditions.

In some cases, the ping pong handover or redirection may impact call performance. For example, the ping pong handover or redirection may result in missed calls or dropped calls. In some cases, the ping pong handover or redirection may impact data services. For example, the UE 305 may experience a delay in the form of a data stall. In some cases, a user interface associated with the UE 305 may switch between an LTE interface and a 5G interface. This may occur even when the UE 305 is stationary. Thus, the ping pong handover or redirection may create an undesirable experience for the user of the UE 305.

Techniques and apparatuses are described herein for ping pong handover or redirection detection and avoidance. In some aspects, the UE 305 may compare an external list of ping pong handovers or redirections that is maintained by an access point, and an internal list of ping pong handovers or redirections that is maintained by the UE 305. The UE 305 may identify a ping pong detection criterion, for a handover or redirection between the first network node 310 and the second network node 315, based, at least in part, on the external list, the internal list, both the external list and the internal list, or neither of the external list nor the internal list indicating a previous ping pong handover or redirection between the first network node 310 and the second network node 315. In some aspects, the UE 305 may obtain a configuration that indicates one or more measurement conditions associated with a reporting event. The UE 305 may obtain an indication that the reporting event is associated with a handover or redirection between a first network node and a second network node. The UE 305 may obtain an indication that the handover or redirection between the first network node and the second network node is a ping pong handover or redirection. The UE 305 may apply one or more other measurement conditions, associated with another reporting event, for avoiding the ping pong handover or redirection.

As described above, a ping pong handover or redirection condition may negatively impact the performance of the UE 305. For example, the ping pong handover or redirection may result in dropped calls, missed calls, and/or delayed data services of the UE 305. Using the techniques and apparatuses described herein, the UE 305 may be configured to detect a ping pong handover or redirection and/or to avoid the ping pong handover or redirection. Thus, the UE 305 may not switch between the network nodes, or may not switch between the network nodes as frequently, thereby improving the performance of the UE 305.

As indicated above, Fig. 3 is provided as an example. Other examples may differ from what is described with respect to Fig. 3.

Fig. 4 is a diagram illustrating an example 400 of ping pong handover or redirection detection, in accordance with the present disclosure.

As shown in connection with reference number 405, the UE 305 may compare an external list of ping pong handovers and redirections and an internal list of ping pong handovers and redirections. The external list of ping pong handovers and redirections may be maintained by an access point. The internal list of ping pong handovers and redirections may be maintained by the UE 305.

In some aspects, the UE 305 may obtain the external list of ping pong handovers and redirections from the access point. For example, the access point may transmit, and the UE 305 may receive, the external list of ping pong handovers and redirections. In some aspects, the external list of ping pong handovers and redirections may be an original equipment manufacturer (OEM) list of ping pong handovers and redirections. In some aspects, the OEM list of ping pong handovers and redirections may be an OEM cell global identity (CGI) list of ping pong handovers and redirections. In some aspects, the external list of ping pong handovers and redirections may be a list of previous ping pong handovers and redirections that were detected by the access point. For example, the access point may detect a ping pong handover or redirection (e.g., between the first network node 310 and the second network node 315) and may record the ping pong handover or redirection in the external list of ping pong handovers and redirections.

In some aspects, the internal list of ping pong handovers and redirections may be maintained and stored by the UE 305. For example, the internal list of ping pong handovers and redirections may be stored in a memory of the UE 305. In some aspects, the internal list of ping pong handovers and redirections may be a list of previous ping pong handovers and redirections that were detected by the UE 305. For example, the UE 305 may detect a ping pong handover or redirection (e.g., between the first network node 310 and the second network node 315) and may record the ping pong handover or redirection in the external list of ping pong handovers and redirections.

In some aspects, the external list and/or the internal list of ping pong handovers and redirections may indicate ping pong handovers or redirections between device pairs (or other device combinations). For example, the external list and/or the internal list may indicate that a ping pong handover or redirection occurred between the first network node 310 and the second network node 315. As described above, the first network node 310 may be an NR-based network node or an LTE-based network node, and the second network node 315 may be an other of the NR-based network node and the LTE-based network node. In some aspects, the external list and/or the internal list of ping pong handovers and redirections may indicate individual devices that are associated with previous ping pong handovers or redirections. For example, the external list and/or the internal list may indicate that the first network node 310 is associated with a previous ping pong handover or redirection.

As shown in connection with reference number 410, the UE 305 may identify a ping pong detection criterion, for a handover or redirection between the first network node 310 and the second network node 315, based, at least in part, on the external list, the internal list, both the external list and the internal list, or neither of the external list nor the internal list indicating a previous ping pong handover or redirection between the first network node 310 and the second network node 315. For example, the UE 305 may identify a ping pong detection criterion based, at least in part, on the external list, the internal list, both the external list and the internal list, or neither of the external list nor the internal list indicating the previous ping pong handover or redirection between the first network node 310 and the second network node 315. Additionally, or alternatively, the UE 305 may identify the ping pong detection criterion based at least in part on one or more other factors or conditions.

In some aspects, the UE 305 may determine whether the external list of ping pong handovers and redirection and/or the internal list of ping pong handovers and redirections indicates a previous ping pong handover or redirection between the first network node 310 and the second network node 315. For example, the UE 305 may compare the external list and the internal list (as described above in connection with reference number 405) and may determine whether both the external list and the internal list indicate the previous ping pong handover or redirection, whether only the external list indicates the previous ping pong handover or redirection, whether only the internal list indicates the previous ping pong handover or redirection, or whether neither the external list nor the internal list indicates the previous ping pong handover or redirection. The UE 305 may determine the ping pong detection criterion to be applied for current or future ping pong detection based at least in part on the comparison.

In some aspects, the UE 305 may identify a first ping pong detection criterion based at least in part on both the external list and the internal list indicating the previous ping pong handover or redirection between the first network node 310 and the second network node 315. In some aspects, the first ping pong detection criterion may be associated with a high level of strictness. For example, the first ping pong detection criterion may indicate that a single handover or redirection between the first network node 310 and the second network node 315 should be classified as a ping pong handover or redirection. Since both the external list and the internal list indicate previous ping pong handover or redirection occurrences between the first network node 310 and the second network node 315, the probability that a current or future handover or redirection, between the first network node 310 and the second network node 315, is a ping pong handover or redirection, may be high.

In some aspects, the UE 305 may identify a second ping pong detection criterion based at least in part on only one of the external list or the internal list indicating the previous ping pong handover or redirection between the first network node 310 and the second network node 315. In some aspects, the second ping pong detection criterion may be associated with a medium level of strictness. In some aspects, the second ping pong detection criterion may indicate that a certain number of handovers or redirections, within a time period, between the first network node 310 and the second network node 315, should be classified as a ping pong handover or redirection. For example, the second ping pong detection criterion may indicate that two handovers or redirections within the time period indicates a ping pong handover or redirection. Since only one of the external list and the internal list indicate the previous ping pong occurrence between the first network node 310 and the second network node 315, the probability that a current or future handover or redirection, between the first network node 310 and the second network node 315, is a ping pong handover or redirection, may be medium.

In some aspects, the UE 305 may identify a third ping pong detection criterion based at least in part on neither of the external list nor the internal list indicating the previous ping pong handover or redirection between the first network node 310 and the second network node 315. In some aspects, the third ping pong detection criterion may be associated with a low level of strictness. In some aspects, the third ping pong detection criterion may indicate that a certain number of handovers or redirections, within a time period, between the first network node 310 and the second network node 315, should be classified as a ping pong handover or redirection. For example, the third ping pong detection criterion may indicate that four handovers or redirections within the time period indicates a ping pong handover or redirection. Since neither of the external list nor the internal list indicates previous ping pong handover or redirection occurrences between the first network node 310 and the second network node 315, the probability that a current or future handover or redirection, between the first network node 310 and the second network node 315, is a ping pong handover or redirection, may be low.

In some aspects, the UE 305 may record a ping pong handover or redirection between the first network node 310 and the second network node 315 based at least in part on identifying the ping pong handover or redirection. For example, the UE 305 may detect a ping pong handover or redirection condition based at least in part on one or more of the ping pong detection criteria, and may record, in the internal list, a cell and frequency of the first network node 310, and a cell and frequency of the second network node 315, as a ping pong handover or redirection combination.

In some aspects, the UE 305 may record the ping pong combination based at least in part on detecting that the third criterion has been satisfied (e.g., both the external list and the internal list indicate the previous ping pong handover or redirection). For example, the UE 305 may record the cell and frequency of the first network node 310, and the cell and frequency of the second network node 315, as a ping pong handover or redirection combination, based at least in part on a single handover or redirection from the first network node 310 to the second network node 315.

In some aspects, the UE 305 may record the ping pong combination based at least in part on detecting that the second criterion has been satisfied (e.g., only one of the external list and the internal list indicates the previous ping pong handover or redirection). For example, the UE 305 may record the cell and frequency of the first network node 310, and the cell and frequency of the second network node 315, as a ping pong handover or redirection combination, based at least in part on at least two handover or redirection occurrences, from the first network node 310 to the second network node 315, within the time period.

In some aspects, the UE 305 may record the ping pong combination based at least in part on detecting that the third criterion has been satisfied (e.g., neither the external list nor the internal list indicate the previous ping pong handover or redirection). For example, the UE 305 may record the cell and frequency of the first network node 310, and the cell and frequency of the second network node 315, as a ping pong handover or redirection combination, based at least in part on at least four handover or redirection occurrences, from the first network node 310 to the second network node 315, within the time period.

In some aspects, the UE 305 may maintain a single timer for ping pong handover or redirection detection. For example, the UE 305 may use the same timer for applying the first ping pong detection criterion, the second ping pong detection criterion, and/or the third ping pong detection criterion.

As described above, a ping pong handover or redirection condition may negatively impact the performance of the UE 305. For example, the ping pong handover or redirection may result in dropped calls, missed calls, and/or delayed data services of the UE 305. Using the techniques and apparatuses described herein, the UE 305 may be configured to detect a ping pong handover or redirection and/or to avoid the ping pong handover or redirection. Thus, the UE 305 may not switch between the network nodes, or may not switch between the network nodes as frequently, thereby improving the performance of the UE 305.

As indicated above, Fig. 4 is provided as an example. Other examples may differ from what is described with respect to Fig. 4.

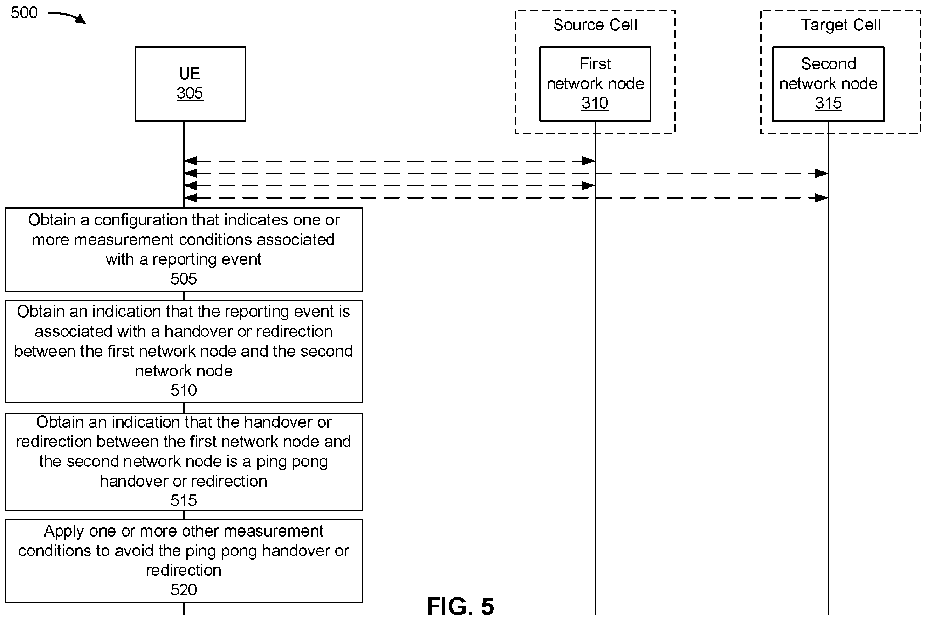

Fig. 5 is a diagram illustrating an example 500 of ping pong handover or redirection avoidance, in accordance with the present disclosure.

As shown in connection with reference number 505, the UE 305 may obtain a configuration that indicates one or more measurement conditions associated with a reporting event. The reporting event may correspond to one or more of the reporting events described above. For example, the reporting event may be an event A2 or an event B2. The one or more measurement conditions may be referred to herein as "the measurement conditions". Thus, the measurement conditions may include a single measurement condition, or multiple measurement conditions.

In some aspects, the measurement conditions may include one or more channel measurement conditions, such as one or more channel measurement thresholds. For example, the measurement conditions may include an RSRP threshold, an RSRQ threshold, and/or an SINR threshold associated with the reporting event. In some aspects, different reporting events may be associated with different measurement conditions or thresholds. For example, the event B1 may be associated with first measurement conditions that include a first RSRP threshold, a first RSRQ threshold, and/or a first SINR threshold, while the event B2 may be associated with second measurement conditions that include a second RSRP threshold, a second RSRQ threshold, and/or a second SINR threshold. The second measurement conditions may be stricter than the first measurement conditions. For example, the second RSRQ threshold may be stricter (e.g., higher) than the first RSRP threshold. In some aspects, a second measurement condition may be "stricter" than a first measurement condition if the second measurement condition is less likely to result in a ping pong handover or redirection condition.

As shown in connection with reference number 510, the UE 305 may obtain an indication that the reporting event is associated with a handover or redirection between the first network node 310 and the second network node 315. For example, the UE 305 may determine that the reporting event is associated with the handover or redirection between the first network node 310 and the second network node 315.

In a first example, as described above, the event B1 may be triggered when a measurement associated with a neighboring inter-system cell becomes greater than a threshold. The UE 305 may determine that a handover or redirection from the first network node 310 to the second network node 315 corresponds to the event B1 reporting. For example, the UE 305 may determine that the handover or redirection is based at least in part on the measurement associated with the neighboring inter-system cell becoming greater than the threshold.

In a second example, as described above, the event A2 may be triggered when the serving cell measurement becomes less than a threshold. The UE 305 may determine that the handover or redirection from the first network node 310 to the second network node 315 corresponds to the event A2 reporting. For example, the UE 305 may determine that the handover or redirection is based at least in part on the measurement associated with the serving cell becoming less than the threshold.

In some aspects, the UE 305 may determine that the reporting event is associated with the handover or redirection between the first network node 310 and the second network node 315 based at least in part on a time threshold (e.g., a threshold time period). For example, the UE 305 may determine that the reporting event is associated with the handover or redirection based at least in part on a time period between the reporting event and the handover or redirection being less than the threshold, or less than or equal to the threshold. Alternatively, the UE 305 may determine that the reporting event is not associated with the handover or redirection based at least in part on the time period between the reporting event and the handover or redirection being greater than the threshold, or greater than or equal to the threshold.

In some aspects, the UE 305 may determine whether the handover or redirection is an NR2L handover or redirection and/or an L2NR handover or redirection. Example features of NR2L and L2NR handovers or redirections are described in connection with Table 1.

**Table 1: NR2L and L2NR Handovers**

| **No.** | **Applicability** | **Scenario** | **Mitigation** |
|---|---|---|---|
| 1 | NR2L | Frequent redirection and handover occurs due to B1 event report configured for LTE neighbor cells | Avoid NR2L redirection and handover when it doesn't meet the internal B2 ping-pong criteria (or additional criteria) |
| 2 | NR2L | Frequent redirection and handover occurs due to A2 event report | Avoid NR2L redirection and handover when it doesn't meet the new ping-pong criteria of A2 (or additional criteria) |
| 3 | L2NR | Frequent redirection and handover occurs due to B1 event report configured for NR neighbor cells | Avoid L2NR redirection and handover when it doesn't meet the internal B2 ping-pong criteria (or additional criteria) |
| 4 | L2NR | Frequent redirection and handover occurs due to A2 event report configured for NR neighbor cells | Avoid L2NR redirection and handover when it doesn't meet the new ping-pong criteria of A2 (or additional criteria) |

As shown in connection with reference number 515, the UE 305 may obtain an indication that the handover or redirection between the first network node 310 and the second network node 315 is a ping pong handover or redirection. For example, the UE 305 may determine that the handover or redirection between the first network node 310 and the second network node 315 is a ping pong handover or redirection as described above in connection with the example 400.

As shown in connection with reference number 520, the UE 305 may apply one or more other measurement conditions to avoid or mitigate the ping pong handover or redirection. The one or more other measurement conditions may be referred to herein as "the other measurement conditions." Thus, the other measurement conditions may include a single other measurement condition, or multiple other measurement conditions. As described above, the other measurement conditions may be stricter than the measurement conditions (e.g., the configured measurement conditions).

In the first example described above, the UE 305 may determine that the handover or redirection is associated with the event B1. For example, the handover or redirection may be associated with a reporting event that results from a measurement associated with a neighboring inter-system cell becoming greater than a threshold. However, the UE 305 may not apply the measurement conditions associated with the event B1. Instead, the UE 305 may apply the measurement conditions associated with the event B2 (e.g., internal B2 measurement conditions). The internal B2 measurement conditions may be the same as, or may be based at least in part on, the measurement conditions associated with the event B2. Since the internal B2 measurement conditions are stricter than the configured measurement conditions for the event B1, the UE 305 is less likely to identify the handover or redirection as a ping pong handover or redirection.

In some aspects, the UE 305 may initiate a ping pong timer associated with the event B1. The UE 305 may apply the internal B2 measurement conditions, during an active state of the ping pong timer for the event B1 (e.g., while the ping pong timer is running), for evaluating the ping pong handover or redirection event.

In some aspects, the UE 305 may determine to avoid the ping pong handover or redirection in the case that the serving cell (e.g., the cell associated with the first network node 310) is in a good radio frequency (RF) condition. In some aspects, "avoiding" or "mitigating" the ping pong handover or redirection may include not performing, or attempting not to perform, the handover or redirection between the first network node 310 and the second network node 315 (e.g., from the first network node 310 to the second network node 315). For example, the UE 305 may detect a handover or redirection condition that involves multiple handovers or redirections between the first network node 310 and the second network node 315, but may "avoid" or "mitigate" the ping pong handover or redirection by not performing any additional handovers or redirections between the first network node 310 and the second network node 315.

In the example where the serving cell is an NR serving cell, the RSRP threshold, RSRQ threshold, or SINR threshold, associated with the internal B2 measurement conditions, may be greater than the RSRP measurement, RSRQ measurement, or SINR measurement, respectively, of the serving cell. In the example where the serving cell is an LTE serving cell, the RSRP threshold, or RSRQ threshold, associated with the internal B2 measurement conditions, may be greater than the RSRP measurement, or the RSRQ measurement, respectively, of the serving cell.

In some aspects, the threshold conditions for the target cell (e.g., the cell associated with the second network node 315) may be stricter than the internal B2 measurement conditions. In the example where the serving cell is an NR serving cell, the RSRP threshold, RSRQ threshold, or SINR threshold, associated with the internal B2 measurement conditions, may be lower than the RSRP measurement, RSRQ measurement, or SINR measurement, respectively, of the serving cell. In the example where the serving cell is an LTE serving cell, the RSRP threshold, or RSRQ threshold, associated with the internal B2 measurement conditions, may be lower than the RSRP measurement, or the RSRQ measurement, respectively, of the serving cell.

In the second example described above, the UE 305 may determine that the handover or redirection is associated with an event A2. For example, the handover or redirection may be associated with a reporting event that results from the serving cell measurement becoming less than the threshold. However, the UE 305 may not apply the configured measurement conditions associated with the A2 reporting event. Instead, the UE 305 may apply one or more internal A2 measurement conditions. The internal A2 measurement conditions may be based at least in part on the configured measurement conditions for the event A2. Since the internal A2 measurement conditions are stricter than the configured event A2 measurement conditions, the UE 305 is less likely to identify the handover or redirection as a ping pong handover or redirection.

In some aspects, the UE 305 may initiate a ping pong timer associated with the event A2. The UE 305 may apply the internal A2 measurement conditions, during an active state of the ping pong timer for the event A2 (e.g., while the ping pong timer is running), for evaluating the ping pong handover or redirection event.

In some aspects, in the example where the serving cell is an NR serving cell, the RSRP threshold, RSRQ threshold, or SINR threshold, associated with the internal A2 measurement conditions, may be lower than a lowest RSRP measurement, RSRQ measurement, or SINR measurement, respectively, of the serving cell. In the example where the serving cell is an LTE serving cell, the RSRP threshold, or RSRQ threshold, associated with the internal B2 measurement conditions, may be lower than a lowest RSRP measurement, or RSRQ measurement, respectively, of the serving cell.

In some aspects, the handover or redirection may not be avoided or mitigated even after applying the one or more other measurement conditions. In this case, the UE 305 may identify one or more additional measurement conditions for avoiding the ping pong handover or redirection. For example, the UE 305 may determine to perform a handover or redirection to a third network node. In an example, the UE 305 may select a third network node that is not associated with any previous ping pong handovers or redirections. In another example, the UE 305 may select a third network node that is not associated with a previous ping pong handover or redirection with the first network node 310 or the second network node 315. The UE 305 may be configured to prioritize the selection of the third network node based at least in part on the previous handovers or redirections associated with the third network node. In some aspects, the UE 305 may increase the strictness of the other measurement conditions. Increasing the strictness of the other measurement conditions may further decrease the likelihood of the handover or redirection being a ping pong handover or redirection. For example, the UE 305 may increase the RSRP, the RSRQ, and/or the SINR threshold of the internal B2 measurement conditions or the internal A2 measurement conditions to avoid the ping pong handover or redirection.

In a first example scenario, a first cell associated with the first network node 310 may be an NR cell, and a second cell associated with the second network node 315 may be an LTE cell. The first cell may be configured with LTE neighbors and may be configured for event B1. The second cell may be configured with NR neighbors and may be configured for event B1. The UE 305 may camp on the first cell. The first cell's RSRP may be higher than the second cell's B1 threshold for NR neighbors. The second cell's RSRP may be higher than the first cell's B1 threshold for LTE neighbors. The UE 305 may be in a stationary state. The UE 305 may stay in the first cell or the second cell for a time period after several handovers or redirections between the first cell and the second cell. In this example, the UE 305 may not report the B1 event after several handover or redirection occurrences.

In a second example scenario, the first cell associated with the first network node 310 may be an NR cell, and the second cell associated with the second network node 315 may be an LTE cell. The first cell may be configured for event A2. The second cell may be configured for event B1. The UE 305 may camp on the first cell. The first cell's RSRP may be lower than the second cell's A2 threshold. The second cell's RSRP may be higher than the first cell's B1 threshold. The UE 305 may be in a stationary state. The UE 305 may stay in the first cell or the second cell for a time period after several handovers or redirections between the first cell and the second cell. In this example, the UE 305 may not report the A2 event after several handover or redirection occurrences.

As described above, a ping pong handover or redirection condition may negatively impact the performance of the UE 305. For example, the ping pong handover or redirection may result in dropped calls, missed calls, and/or delayed data services of the UE 305. Using the techniques and apparatuses described herein, the UE 305 may be configured to detect a ping pong handover or redirection and/or to avoid the ping pong handover or redirection. Thus, the UE 305 may not switch between the network nodes, or may not switch between the network nodes as frequently, thereby improving the performance of the UE 305.

As indicated above, Fig. 5 is provided as an example. Other examples may differ from what is described with respect to Fig. 5.

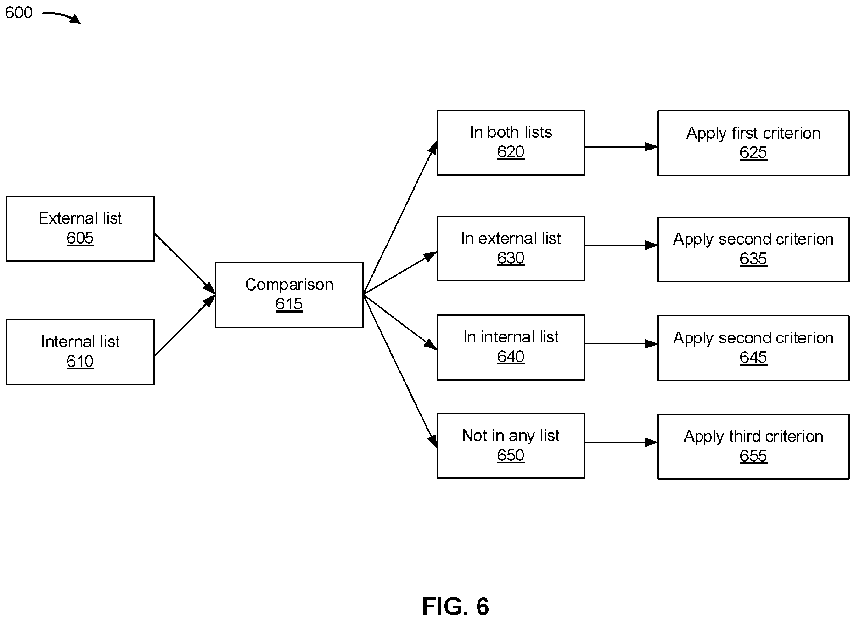

Fig. 6 is a diagram illustrating an example 600 of ping pong handover or redirection avoidance, in accordance with the present disclosure.

As shown in connection with reference number 605, the UE 305 may obtain an external list of ping pong handovers or redirections. The external list of ping pong handovers or redirections may be received from an access point. The external list of ping pong handovers or redirections may be the external list of ping pong handovers or redirections described above in connection with the example 400 described in Fig. 4.

As shown in connection with reference number 610, the UE 305 may obtain an internal list of ping pong handovers or redirections. The internal list of ping pong handovers or redirections may be stored at the UE 305. The internal list of ping pong handovers or redirections may be the internal list of ping pong handovers or redirections described above in connection with the example 400 described in Fig. 4.

As shown in connection with reference number 615, the UE 305 may perform a comparison of the external list of ping pong handovers or redirections and the internal list of ping pong handovers or redirections. For example, the UE 305 may compare the external list and the internal list as described above in connection with reference number 405 described in Fig. 4.

As shown in connection with reference number 620, the UE 305 may determine, based at least in part on the comparison, that a previous ping pong handover or redirection condition between the first network node 310 and the second network node 315 is identified in both the external list and the internal list of ping pong handovers or redirections.

As shown in connection with reference number 625, the UE 305 may apply a first criterion based at least in part on both the external list and the internal list indicating the previous ping pong handover or redirection between the first network node 310 and the second network node 315. As described herein, the first criterion may be associated with a high level of strictness. For example, the first criterion may indicate that a single handover or redirection between the first network node 310 and the second network node 315 should be classified as a ping pong handover or redirection.

As shown in connection with reference number 630, the UE 305 may determine, based at least in part on the comparison, that a previous ping pong handover or redirection condition between the first network node 310 and the second network node 315 is identified in the external list of ping pong handovers or redirections.

As shown in connection with reference number 635, the UE 305 may apply a second criterion based at least in part on only the external list indicating the previous ping pong handover or redirection between the first network node 310 and the second network node 315. As described herein, the second criterion may be associated with a medium level of strictness. For example, the second criterion may indicate that two handovers or redirections within a time period indicates a ping pong handover or redirection.

As shown in connection with reference number 640, the UE 305 may determine, based at least in part on the comparison, that a previous ping pong handover or redirection condition between the first network node 310 and the second network node 315 is identified in the internal list of ping pong handovers or redirections.

As shown in connection with reference number 645, the UE 305 may apply a second criterion based at least in part on only the internal list indicating the previous ping pong handover or redirection between the first network node 310 and the second network node 315. As described herein, the second criterion may be associated with a medium level of strictness. For example, the second criterion may indicate that two handovers or redirections within a time period indicates a ping pong handover or redirection.

As shown in connection with reference number 650, the UE 305 may determine, based at least in part on the comparison, that a previous ping pong handover or redirection condition between the first network node 310 and the second network node 315 is not identified in either the external list nor the internal list of ping pong handovers or redirections.

As shown in connection with reference number 655, the UE 305 may apply a third criterion based at least in part on neither the external list nor the internal list indicating the previous ping pong handover or redirection between the first network node 310 and the second network node 315. As described herein, the third criterion may be associated with a low level of strictness. For example, the third criterion may indicate that four handovers or redirections within the time period indicates a ping pong handover or redirection.

As indicated above, Fig. 6 is provided as an example. Other examples may differ from what is described with respect to Fig. 6.

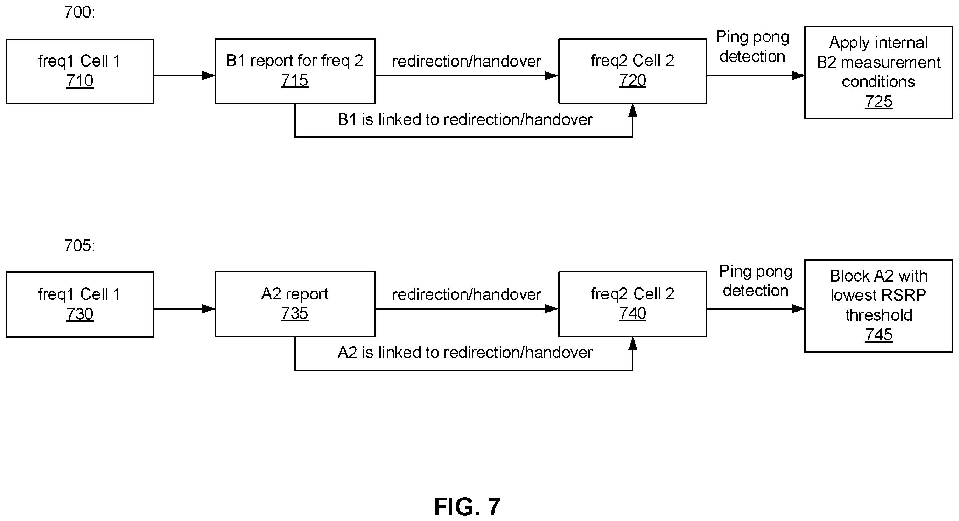

Fig. 7 is a diagram illustrating examples 700 and 705 of ping pong handover or redirection avoidance, in accordance with the present disclosure.

In the first example 700, as shown in connection with reference number 710, the UE 305 may communicate with a first cell (e.g., associated with the network node 310) using a first frequency.

As shown in connection with reference number 715, the UE 305 may receive an event B1 report associated with a second frequency.

As shown in connection with reference number 720, the UE 305 may communicate with a second cell (e.g., associated with the network node 315) using the second frequency. For example, the UE 305 may perform a handover or redirection from the first cell to the second cell. The UE 305 may determine whether or not the handover or redirection from the first cell to the second cell is associated with a ping pong event. For example, the UE 305 may determine that the handover or redirection is associated with the ping pong event if a time period between the event B1 report and the handover or redirection is less than, or less than or equal to, a time period threshold. Alternatively, the UE 305 may determine that the handover or redirection is not associated with the ping pong event if the time period between the event B1 report and the handover or redirection is greater than, or greater than or equal to, the time period threshold.

As shown in connection with reference number 725, the UE 305 may apply the internal B2 measurement conditions (described herein) based at least in part on determining that the handover or redirection is associated with the ping pong event. The UE 305 may apply the internal B2 measurement conditions in order to avoid or mitigate the ping pong handover or redirection.

In the second example 705, as shown in connection with reference number 730, the UE 305 may communicate with a first cell (e.g., associated with the network node 310) using a first frequency.

As shown in connection with reference number 735, the UE 305 may receive an event A2 report.

As shown in connection with reference number 740, the UE 305 may communicate with a second cell (e.g., associated with the network node 315) using the second frequency. For example, the UE 305 may perform a handover or redirection from the first cell to the second cell. The UE 305 may determine whether or not the handover or redirection from the first cell to the second cell is associated with a ping pong event. For example, the UE 305 may determine that the handover or redirection is associated with the ping pong event if a time period between the event A2 report and the handover or redirection is less than, or less than or equal to, a time period threshold. Alternatively, the UE 305 may determine that the handover or redirection is not associated with the ping pong event if the time period between the event A2 report and the handover or redirection is greater than, or greater than or equal to, the time period threshold.

As shown in connection with reference number 745, the UE 305 may block the A2 event with the lowest RSRP threshold. For example, the UE 305 may apply a lowest RSRP threshold (described herein) to the event A2 to avoid or mitigate the ping pong handover or redirection.

As indicated above, Fig. 7 is provided as an example. Other examples may differ from what is described with respect to Fig. 7.

Fig. 8 is a diagram illustrating an example process 800 performed, for example, by a UE, in accordance with the present disclosure. Example process 800 is an example where the UE (e.g., UE 120) performs operations associated with ping pong handover or redirection detection and avoidance.

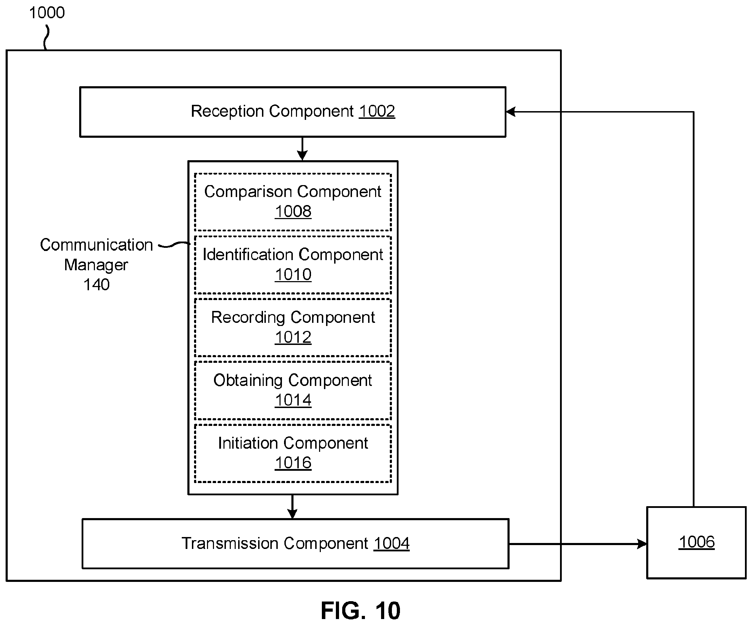

As shown in Fig. 8, in some aspects, process 800 may include comparing an external list of ping pong handovers or redirections that is maintained by an access point, and an internal list of ping pong handovers or redirections that is maintained by the UE (block 810). For example, the UE (e.g., using communication manager 140 and/or comparison component 1008, depicted in Fig. 10) may compare an external list of ping pong handovers or redirections that is maintained by an access point, and an internal list of ping pong handovers or redirections that is maintained by the UE, as described above, for example, with reference to Figs. 4, 5, 6, and/or 7.

As further shown in Fig. 8, in some aspects, process 800 may include identifying a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node (block 820). For example, the UE (e.g., using communication manager 140 and/or identification component 1010, depicted in Fig. 10) may identify a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node, as described above, for example, with reference to Figs. 4, 5, 6, and/or 7.

Process 800 may include additional aspects, such as any single aspect or any combination of aspects described below and/or in connection with one or more other processes described elsewhere herein.

In a first aspect, identifying the ping pong detection criterion comprises identifying a first ping pong detection criterion based at least in part on both the external list and the internal list indicating the previous ping pong handover or redirection between the first network node and the second network node, identifying a second ping pong detection criterion based at least in part on only one of the external list or the internal list indicating the previous ping pong handover or redirection between the first network node and the second network node, or identifying a third ping pong detection criterion based at least in part on neither of the external list nor the internal list indicating the previous ping pong handover or redirection between the first network node and the second network node.

In a second aspect, alone or in combination with the first aspect, the first ping pong detection criterion indicates to identify a ping pong handover or redirection condition based at least in part on a single handover or redirection occurrence between the first network node and the second network node.

In a third aspect, alone or in combination with one or more of the first and second aspects, process 800 includes detecting the single handover or redirection occurrence between the first network node and the second network node, and indicating, in the internal list, based at least in part on detecting the single handover or redirection occurrence, a cell and frequency of the first network node, and a cell and frequency of the second network node, as a ping pong handover or redirection combination.

In a fourth aspect, alone or in combination with one or more of the first through third aspects, the second ping pong detection criterion indicates to identify a ping pong handover or redirection condition based at least in part on two or more handover or redirection occurrences, within a time period, between the first network node and the second network node.

In a fifth aspect, alone or in combination with one or more of the first through fourth aspects, process 800 includes detecting the two or more handover or redirection occurrences between the first network node and the second network node within the time period, and indicating, in the internal list, based at least in part on detecting the two or more handover or redirection occurrences within the time period, a cell and frequency of the first network node, and a cell and frequency of the second network node, as a ping pong handover or redirection combination.

In a sixth aspect, alone or in combination with one or more of the first through fifth aspects, the third ping pong detection criterion indicates to identify a ping pong handover or redirection condition based at least in part on four or more handover or redirection occurrences, within a time period, between the first network node and the second network node.

In a seventh aspect, alone or in combination with one or more of the first through sixth aspects, process 800 includes detecting the four or more handover or redirection occurrences between the first network node and the second network node within the time period, and indicating, in the internal list, based at least in part on detecting the four or more handover occurrences within the time period, a cell and frequency of the first network node, and a cell and frequency of the second network node, as a ping pong handover or redirection combination.

In an eighth aspect, alone or in combination with one or more of the first through seventh aspects, the first network node is Long Term Evolution (LTE)-based network node or a New Radio (NR)-based network node, and the second network node is an other of the LTE-based network node or the NR-based network node.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram illustrating an example process 900 performed, for example, by a UE, in accordance with the present disclosure. Example process 900 is an example where the UE (e.g., UE 120) performs operations associated with ping pong handover or redirection detection and avoidance.

As shown in Fig. 9, in some aspects, process 900 may include obtaining a configuration that indicates one or more measurement conditions associated with a reporting event (block 910). For example, the UE (e.g., using communication manager 140 and/or obtaining component 1014, depicted in Fig. 10) may obtain a configuration that indicates one or more measurement conditions associated with a reporting event, as described above, for example, with reference to Figs. 4, 5, 6, and/or 7.

As further shown in Fig. 9, in some aspects, process 900 may include obtaining an indication that the reporting event is associated with a handover or redirection between a first network node and a second network node (block 920). For example, the UE (e.g., using communication manager 140 and/or obtaining component 1014, depicted in Fig. 10) may obtain an indication that the reporting event is associated with a handover or redirection between a first network node and a second network node, as described above, for example, with reference to Figs. 4, 5, 6, and/or 7.

As further shown in Fig. 9, in some aspects, process 900 may include obtaining an indication that the handover or redirection between the first network node and the second network node is a ping pong handover or redirection (block 930). For example, the UE (e.g., using communication manager 140 and/or obtaining component 1014, depicted in Fig. 10) may obtain an indication that the handover or redirection between the first network node and the second network node is a ping pong handover or redirection, as described above, for example, with reference to Figs. 4, 5, 6, and/or 7.

As further shown in Fig. 9, in some aspects, process 900 may include applying one or more other measurement conditions to avoid the ping pong handover or redirection (block 940). For example, the UE (e.g., using communication manager 140 and/or initiation component 1016, depicted in Fig. 10) may apply one or more other measurement conditions to avoid the ping pong handover or redirection, as described above, for example, with reference to Figs. 4, 5, 6, and/or 7.

Process 900 may include additional aspects, such as any single aspect or any combination of aspects described below and/or in connection with one or more other processes described elsewhere herein.

In a first aspect, process 900 includes determining, based at least in part on applying the one or more other measurement conditions, not to perform the ping pong handover or redirection.

In a second aspect, alone or in combination with the first aspect, obtaining the indication that the handover or redirection between the first network node and the second network node is a ping pong handover or redirection comprises determining that a time interval between the reporting event and the handover or redirection is less than a threshold time interval.

In a third aspect, alone or in combination with one or more of the first and second aspects, the one or more other measurement conditions are stricter than the one or more measurement conditions.

In a fourth aspect, alone or in combination with one or more of the first through third aspects, the one or more other measurement conditions are associated with an other reporting event.

In a fifth aspect, alone or in combination with one or more of the first through fourth aspects, the reporting event is a B1 reporting event, and the other reporting event is an internal B2 reporting event.

In a sixth aspect, alone or in combination with one or more of the first through fifth aspects, process 900 includes initiating a timer associated with the reporting event, and applying the one or more other measurement conditions, during an active state of the timer, to avoid the ping pong handover or redirection.

In a seventh aspect, alone or in combination with one or more of the first through sixth aspects, the one or more other measurement conditions comprise a reference signal received power (RSRP) threshold, a reference signal received quality (RSRQ) threshold, or a signal-to-interference-plus-noise ratio (SINR) threshold, that is greater than an RSRP measurement, an RSRQ measurement, or an SINR measurement, respectively, of the second network node.

In an eighth aspect, alone or in combination with one or more of the first through seventh aspects, the one or more other measurement conditions comprise a reference signal received power (RSRP) threshold, a reference signal received quality (RSRQ) threshold, or a signal-to-interference-plus-noise ratio (SINR) threshold, that is less than an RSRP measurement, an RSRQ measurement, or an SINR measurement, respectively, of the first network node.

In a ninth aspect, alone or in combination with one or more of the first through eighth aspects, the reporting event is an A2 reporting event.

In a tenth aspect, alone or in combination with one or more of the first through ninth aspects, process 900 includes initiating a timer associated with the reporting event, and applying the one or more other measurement conditions, during an active state of the timer, to avoid the ping pong handover or redirection.

In an eleventh aspect, alone or in combination with one or more of the first through tenth aspects, the one or more other measurement conditions comprise an RSRP threshold, an RSRQ threshold, or an SINR threshold, that is less than a lowest RSRP measurement, a lowest RSRQ measurement, or a lowest SINR measurement, respectively, of the second network node.

In a twelfth aspect, alone or in combination with one or more of the first through eleventh aspects, process 900 includes performing a handover or redirection to a third network node, or changing a measurement condition threshold, based at least in part on the ping pong handover or redirection not being avoided by applying the one or more other measurement conditions.

In a thirteenth aspect, alone or in combination with one or more of the first through twelfth aspects, the third network node is not associated with a previous handover or redirection condition.

Although Fig. 9 shows example blocks of process 900, in some aspects, process 900 may include additional blocks, fewer blocks, different blocks, or differently arranged blocks than those depicted in Fig. 9. Additionally, or alternatively, two or more of the blocks of process 900 may be performed in parallel.

Fig. 10 is a diagram of an example apparatus 1000 for wireless communication. The apparatus 1000 may be a UE, or a UE may include the apparatus 1000. In some aspects, the apparatus 1000 includes a reception component 1002 and a transmission component 1004, which may be in communication with one another (for example, via one or more buses and/or one or more other components). As shown, the apparatus 1000 may communicate with another apparatus 1006 (such as a UE, a base station, or another wireless communication device) using the reception component 1002 and the transmission component 1004. As further shown, the apparatus 1000 may include the communication manager 140. The communication manager 140 may include one or more of a comparison component 1008, an identification component 1010, a recording component 1012, an obtaining component 1014, or an initiation component 1016, among other examples.

In some aspects, the apparatus 1000 may be configured to perform one or more operations described herein in connection with Figs. 4-7. Additionally, or alternatively, the apparatus 1000 may be configured to perform one or more processes described herein, such as process 800 of Fig. 8, process 900 of Fig. 9, or a combination thereof. In some aspects, the apparatus 1000 and/or one or more components shown in Fig. 10 may include one or more components of the UE described in connection with Fig. 2. Additionally, or alternatively, one or more components shown in Fig. 10 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1002 may receive communications, such as reference signals, control information, data communications, or a combination thereof, from the apparatus 1006. The reception component 1002 may provide received communications to one or more other components of the apparatus 1000. In some aspects, the reception component 1002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1000. In some aspects, the reception component 1002 may include one or more antennas, a modem, a demodulator, a MIMO detector, a receive processor, a controller/processor, a memory, or a combination thereof, of the UE described in connection with Fig. 2.

The transmission component 1004 may transmit communications, such as reference signals, control information, data communications, or a combination thereof, to the apparatus 1006. In some aspects, one or more other components of the apparatus 1000 may generate communications and may provide the generated communications to the transmission component 1004 for transmission to the apparatus 1006. In some aspects, the transmission component 1004 may perform signal processing on the generated communications (such as filtering, amplification, modulation, digital-to-analog conversion, multiplexing, interleaving, mapping, or encoding, among other examples), and may transmit the processed signals to the apparatus 1006. In some aspects, the transmission component 1004 may include one or more antennas, a modem, a modulator, a transmit MIMO processor, a transmit processor, a controller/processor, a memory, or a combination thereof, of the UE described in connection with Fig. 2. In some aspects, the transmission component 1004 may be co-located with the reception component 1002 in a transceiver.

The comparison component 1008 may compare an external list of ping pong handovers or redirections that is maintained by an access point, and an internal list of ping pong handovers or redirections that is maintained by the UE. The identification component 1010 may identify a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node.

The identification component 1010 may detect a single handover or redirection occurrence between the first network node and the second network node. The recording component 1012 may indicate, in the internal list, based at least in part on detecting the single handover or redirection occurrence, a cell and frequency of the first network node, and a cell and frequency of the second network node, as a ping pong handover or redirection combination.

The identification component 1010 may detect two or more handover or redirection occurrences between the first network node and the second network node within a time period. The recording component 1012 may indicate, in the internal list, based at least in part on detecting the two or more handover or redirection occurrences within the time period, a cell and frequency of the first network node, and a cell and frequency of the second network node, as a ping pong handover or redirection combination.

The identification component 1010 may detect four or more handover or redirection occurrences between the first network node and the second network node within a time period. The recording component 1012 may indicate, in the internal list, based at least in part on detecting the four or more handover occurrences within the time period, a cell and frequency of the first network node, and a cell and frequency of the second network node, as a ping pong handover or redirection combination.

The obtaining component 1014 may obtain a configuration that indicates one or more measurement conditions associated with a reporting event. The obtaining component 1014 may obtain an indication that the reporting event is associated with a handover or redirection between a first network node and a second network node. The obtaining component 1014 may obtain an indication that the handover or redirection between the first network node and the second network node is a ping pong handover or redirection. The obtaining component 1014 may apply one or more other measurement conditions to avoid the ping pong handover or redirection.

The identification component 1010 may determine, based at least in part on applying the one or more other measurement conditions, not to perform the ping pong handover or redirection.

The initiation component 1016 may initiate a timer associated with the reporting event. The initiation component 1016 may apply the one or more other measurement conditions, during an active state of the timer, to avoid the ping pong handover or redirection.

The initiation component 1016 may initiate a timer associated with the reporting event. The initiation component 1016 may apply the one or more other measurement conditions, during an active state of the timer, to avoid the ping pong handover or redirection.

The initiation component 1016 may perform a handover or redirection to a third network node, or changing a measurement condition threshold, based at least in part on the ping pong handover or redirection not being avoided by applying the one or more other measurement conditions.

The number and arrangement of components shown in Fig. 10 are provided as an example. In practice, there may be additional components, fewer components, different components, or differently arranged components than those shown in Fig. 10. Furthermore, two or more components shown in Fig. 10 may be implemented within a single component, or a single component shown in Fig. 10 may be implemented as multiple, distributed components. Additionally, or alternatively, a set of (one or more) components shown in Fig. 10 may perform one or more functions described as being performed by another set of components shown in Fig. 10.

The following provides an overview of some Aspects of the present disclosure:
Aspect 1: A method of wireless communication performed by a user equipment (UE), comprising: comparing an external list of ping pong handovers or redirections that is maintained by an access point, and an internal list of ping pong handovers or redirections that is maintained by the UE; and identifying a ping pong detection criterion, for a handover or redirection between a first network node and a second network node, based, at least in part, on the external list, the internal list, both the external list and the internal list, or neither of the external list nor the internal list indicating a previous ping pong handover or redirection between the first network node and the second network node.
Aspect 2: The method of Aspect 1, wherein identifying the ping pong detection criterion comprises: identifying a first ping pong detection criterion based at least in part on both the external list and the internal list indicating the previous ping pong handover or redirection between the first network node and the second network node; identifying a second ping pong detection criterion based at least in part on only one of the external list or the internal list indicating the previous ping pong handover or redirection between the first network node and the second network node; or identifying a third ping pong detection criterion based at least in part on neither of the external list nor the internal list indicating the previous ping pong handover or redirection between the first network node and the second network node.
Aspect 3: The method of Aspect 2, wherein the first ping pong detection criterion indicates to identify a ping pong handover or redirection condition based at least in part on a single handover or redirection occurrence between the first network node and the second network node.
Aspect 4: The method of Aspect 3, further comprising detecting the single handover or redirection occurrence between the first network node and the second network node, and indicating, in the internal list, based at least in part on detecting the single handover or redirection occurrence, a cell and frequency of the first network node, and a cell and frequency of the second network node, as a ping pong handover or redirection combination.
Aspect 5: The method of Aspect 2, wherein the second ping pong detection criterion indicates to identify a ping pong handover or redirection condition based at least in part on two or more handover or redirection occurrences, within a time period, between the first network node and the second network node.
Aspect 6: The method of Aspect 5, further comprising detecting the two or more handover or redirection occurrences between the first network node and the second network node within the time period, and indicating, in the internal list, based at least in part on detecting the two or more handover or redirection occurrences within the time period, a cell and frequency of the first network node, and a cell and frequency of the second network node, as a ping pong handover or redirection combination.
Aspect 7: The method of Aspect 2, wherein the third ping pong detection criterion indicates to identify a ping pong handover or redirection condition based at least in part on four or more handover or redirection occurrences, within a time period, between the first network node and the second network node.
Aspect 8: The method of Aspect 7, further comprising detecting the four or more handover or redirection occurrences between the first network node and the second network node within the time period, and indicating, in the internal list, based at least in part on detecting the four or more handover occurrences within the time period, a cell and frequency of the first network node, and a cell and frequency of the second network node, as a ping pong handover or redirection combination.
Aspect 9: The method of any of Aspects 1-8, wherein the first network node is Long Term Evolution (LTE)-based network node or a New Radio (NR)-based network node, and the second network node is an other of the LTE-based network node or the NR-based network node.
Aspect 10: A method of wireless communication performed by a user equipment (UE), comprising: obtaining a configuration that indicates one or more measurement conditions associated with a reporting event; obtaining an indication that the reporting event is associated with a handover or redirection between a first network node and a second network node; obtaining an indication that the handover or redirection between the first network node and the second network node is a ping pong handover or redirection; and applying one or more other measurement conditions to avoid the ping pong handover or redirection.
Aspect 11: The method of Aspect 10, further comprising determining, based at least in part on applying the one or more other measurement conditions, not to perform the ping pong handover or redirection.
Aspect 12: The method of any of Aspects 10-11, wherein obtaining the indication that the handover or redirection between the first network node and the second network node is a ping pong handover or redirection comprises determining that a time interval between the reporting event and the handover or redirection is less than a threshold time interval.
Aspect 13: The method of any of Aspects 10-12, wherein the one or more other measurement conditions are stricter than the one or more measurement conditions.
Aspect 14: The method of any of Aspects 10-13, wherein the one or more other measurement conditions are associated with an other reporting event.
Aspect 15: The method of Aspect 14, wherein the reporting event is a B1 reporting event, and the other reporting event is an internal B2 reporting event.
Aspect 16: The method of Aspect 14, further comprising: initiating a timer associated with the reporting event; and applying the one or more other measurement conditions, during an active state of the timer, to avoid the ping pong handover or redirection.
Aspect 17: The method of Aspect 14, wherein the one or more other measurement conditions comprise a reference signal received power (RSRP) threshold, a reference signal received quality (RSRQ) threshold, or a signal-to-interference-plus-noise ratio (SINR) threshold, that is greater than an RSRP measurement, an RSRQ measurement, or an SINR measurement, respectively, of the second network node.
Aspect 18: The method of Aspect 14, wherein the one or more other measurement conditions comprise a reference signal received power (RSRP) threshold, a reference signal received quality (RSRQ) threshold, or a signal-to-interference-plus-noise ratio (SINR) threshold, that is less than an RSRP measurement, an RSRQ measurement, or an SINR measurement, respectively, of the first network node.
Aspect 19: The method of any of Aspects 10-18, wherein the reporting event is an A2 reporting event.
Aspect 20: The method of Aspect 19, further comprising: initiating a timer associated with the reporting event; and applying the one or more other measurement conditions, during an active state of the timer, to avoid the ping pong handover or redirection.
Aspect 21: The method of Aspect 19, wherein the one or more other measurement conditions comprise a reference signal received power (RSRP) threshold, a reference signal received quality (RSRQ) threshold, or a signal-to-interference-plus-noise ratio (SINR) threshold, that is less than a lowest RSRP measurement, a lowest RSRQ measurement, or a lowest SINR measurement, respectively, of the second network node.
Aspect 22: The method of any of Aspects 10-21, further comprising performing a handover or redirection to a third network node, or changing a measurement condition threshold, based at least in part on the ping pong handover or redirection not being avoided by applying the one or more other measurement conditions.
Aspect 23: The method of Aspect 22, wherein the third network node is not associated with a previous handover or redirection condition.
Aspect 24: An apparatus for wireless communication at a device, comprising a processor; memory coupled with the processor; and instructions stored in the memory and executable by the processor to cause the apparatus to perform the method of one or more of Aspects 1-9.
Aspect 25: A device for wireless communication, comprising a memory and one or more processors coupled to the memory, the one or more processors configured to perform the method of one or more of Aspects 1-9.
Aspect 26: An apparatus for wireless communication, comprising at least one means for performing the method of one or more of Aspects 1-9.
Aspect 27: A non-transitory computer-readable medium storing code for wireless communication, the code comprising instructions executable by a processor to perform the method of one or more of Aspects 1-9.
Aspect 28: A non-transitory computer-readable medium storing a set of instructions for wireless communication, the set of instructions comprising one or more instructions that, when executed by one or more processors of a device, cause the device to perform the method of one or more of Aspects 1-9.
Aspect 29: An apparatus for wireless communication at a device, comprising a processor; memory coupled with the processor; and instructions stored in the memory and executable by the processor to cause the apparatus to perform the method of one or more of Aspects 10-23.
Aspect 30: A device for wireless communication, comprising a memory and one or more processors coupled to the memory, the one or more processors configured to perform the method of one or more of Aspects 10-23.
Aspect 31: An apparatus for wireless communication, comprising at least one means for performing the method of one or more of Aspects 10-23.
Aspect 32: A non-transitory computer-readable medium storing code for wireless communication, the code comprising instructions executable by a processor to perform the method of one or more of Aspects 10-23.
Aspect 33: A non-transitory computer-readable medium storing a set of instructions for wireless communication, the set of instructions comprising one or more instructions that, when executed by one or more processors of a device, cause the device to perform the method of one or more of Aspects 10-23.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. An apparatus for wireless communication at a user equipment, UE, comprising:
a memory; and
one or more processors, coupled to the memory, configured to:
obtain a configuration that indicates one or more measurement conditions associated with a reporting event;
obtain an indication that the reporting event is associated with a handover or redirection between a first network node and a second network node;
obtain an indication that the handover or redirection between the first network node and the second network node is a ping pong handover or redirection; and
apply one or more other measurement conditions to avoid the ping pong handover or redirection.

2. The apparatus of claim 1, wherein the one or more processors are further configured to determine, based at least in part on applying the one or more other measurement conditions, not to perform the ping pong handover or redirection.

3. The apparatus of claim 1, wherein the one or more processors, to obtain the indication that the handover or redirection between the first network node and the second network node is a ping pong handover or redirection, are configured to determine that a time interval between the reporting event and the handover or redirection is less than a threshold time interval.

4. The apparatus of claim 1, wherein the one or more other measurement conditions are stricter than the one or more measurement conditions.

5. The apparatus of claim 1, wherein the one or more other measurement conditions are associated with an other reporting event.

6. The apparatus of claim 5, wherein the reporting event is a B1 reporting event, and the other reporting event is an internal B2 reporting event.

7. The apparatus of claim 5, wherein the one or more processors are further configured to:
initiate a timer associated with the reporting event; and
apply the one or more other measurement conditions, during an active state of the timer, to avoid the ping pong handover or redirection.

8. The apparatus of claim 5, wherein the one or more other measurement conditions comprise a reference signal received power, RSRP threshold, a reference signal received quality, RSRQ, threshold, or a signal-to-interference-plus-noise ratio SINR, threshold, that is greater than an RSRP measurement, an RSRQ measurement, or an SINR measurement, respectively, of the second network node or the first network node.

9. The apparatus of claim 5, wherein the reporting event is an A2 reporting event.

10. The apparatus of claim 9, wherein the one or more processors are further configured to:
initiate a timer associated with the reporting event; and
apply the one or more other measurement conditions, during an active state of the timer, to avoid the ping pong handover or redirection.

11. The apparatus of claim 9, wherein the one or more other measurement conditions comprise a reference signal received power, RSRP, threshold, a reference signal received quality, RSRQ, threshold, or a signal-to-interference-plus-noise ratio, SINR, threshold, that is less than a lowest RSRP measurement, a lowest RSRQ measurement, or a lowest SINR measurement, respectively, of the second network node.

12. The apparatus of claim 1, wherein the one or more processors are further configured to perform a handover or redirection to a third network node, or change a measurement condition threshold, based at least in part on the ping pong handover or redirection not being avoided by applying the one or more other measurement conditions.

13. The apparatus of claim 12, wherein the third network node is not associated with a previous handover or redirection condition.

14. A method of wireless communication performed by a user equipment, UE, comprising:
obtaining a configuration that indicates one or more measurement conditions associated with a reporting event;
obtaining an indication that the reporting event is associated with a handover or redirection between a first network node and a second network node;
obtaining an indication that the handover or redirection between the first network node and the second network node is a ping pong handover or redirection; and
applying one or more other measurement conditions to avoid the ping pong handover or redirection.

15. The method of claim 14, further comprising determining, based at least in part on applying the one or more other measurement conditions, not to perform the ping pong handover or redirection.
